# EUROPÄISCHE PATENTSCHRIFT

(11) **EP 1 512 331 B1**
(45) Veröffentlichungstag und Bekanntmachung des Hinweises auf die Patenterteilung: **21.11.2007**
(21) Anmeldenummer: 03019896.4
(22) Anmeldetag: 02.09.2003
(51) Int. Cl.: A23L 1/30, A23B 9/14, A23L 1/00, A23K 1/00

(54) **Nahrungsergänzungsmittel**
Dietary supplement
Supplément diététique

(43) Veröffentlichungstag der Anmeldung: 09.03.2005
(73) Patentinhaber: IPC Process Center GmbH & Co., 01277 Dresden (DE)
(72) Erfinder: Kempe, Wolfgang, 01169 Dresden (DE)
(74) Vertreter: Pfenning, Meinig & Partner GbR

(56) Entgegenhaltungen:
- EP-A- 1 287 825
- DE-A- 10 211 195
- US-B1- 6 448 323
- DATABASE WPI Section Ch, Week 198634 Derwent Publications Ltd., London, GB; Class D13, AN 1986-221795 XP002266178 & JP 61 152242 A (NAGAOKA KORYO KK), 10. Juli 1986 (1986-07-10)
- DATABASE WPI Section Ch, Week 199649 Derwent Publications Ltd., London, GB; Class D11, AN 1996-498041 XP002266179 & ZA 9 600 829 A (SASKO PTY LTD), 25. September 1996 (1996-09-25)

## Beschreibung

Die Erfindung betrifft ein Nahrungsergänzungsmittel für die menschliche und auch tierische Ernährung. Dabei soll insbesondere eine günstige Verabreichungsform für Lecithin mit seiner anerkanntermaßen auf menschliche und tierische Organismen vorteilhaften therapeutischen Wirkung, erreicht werden.

Lecithin wird bisher üblicherweise in flüssiger, hochviskoser Form, als Granulat oder in Kapseln, bei denen das Lecithin in einer sich auflösenden Schutzhülle enthalten ist, hergestellt und vertrieben.

Das aus pflanzlichen oder tierischen Ausgangsprodukten gewonnene Lecithin verfügt in der Regel über eine fettige und klebrige Konsistenz, so dass es, wie bereits erwähnt, entweder in flüssiger Form oder in Kapselform verabreicht wird. Im Gegensatz dazu sind die Herstellungskosten für Lecithin-Granulat erheberheblich, da durch eine intensive Trocknung flüssigen Komponenten weitestgehend entfernt werden müssen.

Auch die so hergestellten Granulate sind für die orale Nahrungsaufnahme nicht besonders gut geeignet, da sowohl geschmacklich, wie auch gefühlsmäßig beim Zerkauen der Granulate Defizite zu verzeichnen sind. Insbesondere beim Zerkauen fehlt in der Regel der gewünschte knackige Effekt.

Die JP 61152242 A betrifft heiß getrocknete Cerealien in Form von Bohnen, Früchten, Weizen, Reis, süße Kartoffeln, die mit planzlichem oder tierischen Lecithin beschichtet werden sollen. Die Beschichtung kann weitere Inhaltsstoffe enthalten und auch mit einer äußeren Schicht überzogen sein.

Es ist daher Aufgabe der Erfindung, ein Nahrungsergänzungsmittel mit Lecithin für die humane und auch veterinäre Anwendung zur Verfügung zu stellen, das kostengünstig hergestellt werden kann und vorteilhafte Eigenschaften bei der oralen Aufnahme aufweist.

Erfindungsgemäß wird diese Aufgabe mit einem die Merkmale des Anspruchs 1 aufweisenden Nahrungsergänzungsmittel gelöst. Vorteilhafte Ausgestaltungsformen und Weiterbildungen der Erfindung können mit den in den untergeordneten Ansprüchen bezeichneten Merkmalen erreicht werden.

Bei dem erfindungsgemäßen Nahrungsergänzungsmittel, das in granularer Form hergestellt und verabreicht werden kann, ist auf einem pflanzlichen Samenkorn mit einer sphärischen Oberfläche ein Überzug ausgebildet, der überwiegend Phosphatidylserin als alleiniges Lecithinderivat oder Lecithin und Phosphatidylserin enthält.

Dabei sollte der Anteil an Lecithin im Überzug oberhalb 50 Masse-%, bevorzugt mindestens 70 Masse-% betragen.

Das Lecithinderivat kann im Überzug auch mit geringeren Anteilen, als Lecithin enthalten sein, um dessen physiologisch vorteilhaften Wirkungen ausnutzen zu können. So können bereits wenige mg in einem Überzug ausreichen.

Besonders geeignete pflanzliche Produkte, die eine entsprechend geeignete sphärische Oberfläche aufweisen, sind die verschiedensten Samenkörner, die ohne eine chemische und gegebenenfalls auch eine thermische Vorbehandlung eingesetzt und mit einem das Lecithin aufweisenden Überzug versehen werden können.

Bei einigen solcher pflanzlichen Samenkörner, wie beispielsweise Mohnsamen kann auch auf jegliche mechanische Vorbehandlung verzichtet und dementsprechend der das Lecithin aufweisende Überzug unmittelbar auf die lediglich gereinigte Oberfläche der Mohnsamenkörner aufgebracht werden kann.

Es sind aber auch andere Samenarten, wie z.B. Senf-, Raps- oder Leinensamen ohne weiteres denkbar.

Für den Fall, dass Hirsekörner als pflanzliche Samenkörner eingesetzt werden, sollten die eingesetzten Hirsekörner von ihren Schalen befreit werden.

Die Samenkörner sollen aber weitestgehend Natur belassen bleiben.

Durch die von Hause aus vorhandenen Eigenschaften des Lecithins ist es nicht erforderlich, zusätzliche Bindemittel für die Ausbildung der Überzüge einzusetzen.

Für die Ausbildung der Überzüge lassen sich die emulgierenden Eigenschaften des Lecithins aber vorteilhaft ausnutzen, da bei der Herstellung der Überzüge auf den sphärisch gekrümmten Oberflächen der pflanzlichen Samenkörner die Viskosität nicht ausschließlich durch organische Lösungsmittel, sondern auch durch entsprechende Zugabe von Wasser verringert werden kann, und dementsprechend die Herstellungskosten und der bei der Herstellung erforderliche Sicherheitsaufwand entsprechend verringert werden können.

Innerhalb des überwiegend aus Phosphatidylserin als alleinigem Lecithinderivat oder aus Lecithin und Phosphatidylserin gebildeten U-berzugs können aber auch weitere für den Stoffwechsel bzw. für therapeutische Wirkungen günstige Zusätze enthalten sein.

So können Vitamine, Aromastoffe (wie z.B. Tee, grüner Tee, Vanille), Spurenelemente (wie z.B. Fe oder Ca) aber auch pharmakologisch und/oder therapeutisch wirksame Stoffe oder solche Stoffkomponenten enthalten sein.

Selbstverständlich können auch Farbstoffe eingesetzt werden.

Die zusätzlichen Stoffe oder Stoffkomponenten können in natürlicher aber auch in synthetischer Form eingesetzt werden.

Ein Überzug kann auch aus mehreren Schichten, ähnlich wie die Schalen einer Zwiebel ausgebildet worden sein. Die Schichten können jeweils aus unterschiedlichen Komponenten gebildet sein, wie sie beispielsweise weiter oben genannt worden sind. Einzelne Schichten oder gesamte Überzug können aber auch aus Mischungen von Komponenten gebildet worden sein.

Für den Verzehr, die Lagerung und auch beim Transport ist es vorteilhaft, eine Schutzschicht auf dem Überzug auszubilden. Solche Schutzschichten können filmartig, aber auch als ein physiologisch und toxikologisch unbedenkliches Wachs ausgebildet sein. So kann eine Schutzschicht beispielsweise aus Carnaubawachs gebildet sein. Schutzschichten können aber auch aus Methycellulose oder einem Zucker oder zuckerähnlichen Stoff (z.B. Poly- oder Oligosaccharide) gebildet sein. Eine Filmschicht kann beispielsweise durch Besprühen ausgebildet werden.

Mit an sich bekannten Beschichtungsverfahren und solchen Vorrichtungen können die überwiegend aus Phosphatidylserin als alleinigem Lecithinderivat oder aus Lecithin und Phosphatidylserin gebildeten Überzüge, in denen auch zusätzliche Stoffe bzw. Komponenten enthalten sein können, mit einer gleichmäßigen und konstanten Schichtdicke auf den sphärisch gewölbten Oberflächen der verwendeten pflanzlichen Samenkörner ausgebildet werden.

Das erfindungsgemäße Nahrungsergänzungsmittel in granularer Form kann ohne weiteres oral verzehrt werden.

Es besteht aber auch die Möglichkeit, dieses möglichst unmittelbar vor dem Verzehr anderen Lebensmitteln, beispielsweise einem Joghurt oder entsprechend einem anderen Milchprodukt zuzugeben oder als Bestandteil einer Müslimischung zu verwenden.

Beim Verzehr wirkt sich auch für das Empfinden die knackige Konsistenz der die Überzüge tragenden pflanzlichen Samenkörner angenehm aus.

Insbesondere die für das erfindungsgemäße Nahrungsergänzungsmittel eingesetzten pflanzlichen Samenkörner reduzieren die Herstellungskosten, leisten wegen ihres hohen Faseranteils einen Beitrag, als Ballaststoff für die Verdauung und ermöglichen eine definierte Ausbildung eines Überzugs, da ein Eindiffundieren bzw. ein Infiltrieren, der den Überzug bildenden Stoffe nicht auftreten kann. Dabei ist in der Regel die Masse des Überzugs und demzufolge auch die Masse des Lecithins größer als die Masse des pflanzlichen Samenkorns.

Es besteht auch die Möglichkeit, das erfindungsgemäße Nahrungsergänzungsmittel in einer Mischung von Überzügen mit gleicher oder unterschiedlicher Konsistenz und/oder in einer Mischung von in Überzügen versehenen verschiedenen natürlichen Pflanzenprodukten, die dann entsprechend unterschiedliche Außendurchmesser aufweisen können, zu verwenden.

Im Gegensatz zur letzten Aussage besteht aber auch die Möglichkeit, das erfindungsgemäße Nahrungsergänzungsmittel in granularer Form zur Verfügung zu stellen, bei denen nahezu gleiche Größen, also ein sehr enger gleichmäßiger Korngrößenbereich eingehalten worden ist.

## Patentansprüche

1. Nahrungsergänzungsmittel in granularer Form, bei dem auf einem chemisch und thermisch unbehandelten pflanzlichen Samenkorn mit einer sphärischen Oberfläche ein Lecithin und Phosphatidylserin enthaltender oder Phosphatidylserin enthaltender Überzug ausgebildet ist.

2. Nahrungsergänzungsmittel nach Anspruch 1, **dadurch gekennzeichnet, dass** der Überzug aus mehr als 50 Masse-% Lecithin gebildet ist.

3. Nahrungsergänzungsmittel nach Anspruch 1 oder 2, **dadurch gekennzeichnet, dass** das pflanzliche Samenkorn Mohn-, Raps-, Leinen-, Senf- oder Hirsesamen ist.

4. Nahrungsergänzungsmittel nach mindestens einem der vorhergehenden Ansprüche, **dadurch gekennzeichnet, dass** neben Lecithin im Überzug Vitamine, Aromastoffe, Spurenelemente und/oder pharmazeutische Wirkstoffe bzw. pharmazeutische wirksame Komponenten enthalten sind.

5. Nahrungsergänzungsmittel nach mindestens einem der vorhergehenden Ansprüche, **dadurch gekennzeichnet, dass** der Überzug aus mehreren aus unterschiedlichen Komponenten bestehenden Schichten gebildet ist.

6. Nahrungsergänzungsmittel nach mindestens einem der vorhergehenden Ansprüche, **dadurch gekennzeichnet, dass** der Überzug eine konstante Schichtdicke aufweist.

7. Nahrungsergänzungsmittel nach mindestens einem der vorhergehenden Ansprüche, **dadurch gekennzeichnet, dass** auf dem Überzug eine Schutzschicht ausgebildet ist.

8. Nahrungsergänzungsmittel nach Anspruch 7, **dadurch gekennzeichnet, dass** die Schutzschicht ein Film oder ein Wachs ist.

9. Nahrungsergänzungsmittel nach einem der Ansprüche 1 bis 8, **dadurch gekennzeichnet, dass** die Masse des Überzugs größer, als die Masse des überzogenen pflanzlichen Naturproduktes ist.

## Claims

1. Nutritional additive in granular form, whereby a coating comprising lecithin and phosphate idylserin, or phosphate idylserin only, is applied to a chemically and thermally untreated plant seed grain with a spherical surface.

2. Nutritional additive according to Claim 1, **characterised in that** more than 50% of the coating mass consists of lecithin.

3. Nutritional additive according to Claim 1 or 2, **characterised in that** the plant seed grain is a poppy, rape, linseed, mustard, or millet grain.

4. Nutritional additive according to at least one of the preceding Claims, **characterised in that** the coating may comprise vitamins, flavourings, trace elements, and/or pharmaceutical active ingredients, e.g. pharmaceutical active components, in addition to lecithin.

5. Nutritional additive according to at least one of the preceding Claims, **characterised in that** the coating consists of several layers comprising different components.

6. Nutritional additive according to at least one of the preceding Claims, **characterised in that** the coating comprises a constant layer thickness.

7. Nutritional additive according to at least one of the preceding Claims, **characterised in that** a protective layer is formed on the coating.

8. Nutritional additive according to Claim 7, **characterised in that** the protective layer consists of a film or a wax.

9. Nutritional additive according to one of the Claims 1 to 8, **characterised in that** the coating mass is greater than the mass of the coated natural plant product.

## Revendications

1. Supplément diététique sous forme de granulés, dans lequel, sur une graine végétale non traitée chimiquement et thermiquement et présentant une surface sphérique, est formé un enrobage contenant une lécithine et une phosphatidylsérine ou une phosphatidylsérine.

2. Supplément diététique selon la revendication 1, **caractérisé en ce que** l'enrobage est formé de plus de 50 % en masse de lécithine.

3. Supplément diététique selon la revendication 1 ou 2, **caractérisé en ce que** la graine végétale est une graine de pavot, de colza, de lin, de moutarde ou de millet.

4. Supplément diététique selon au moins l'une des revendications précédentes, **caractérisé en ce qu'**outre la lécithine, sont contenus dans l'enrobage des vitamines, des substances d'arôme, des oligo-éléments et/ou des principes actifs pharmaceutiques ou des composants pharmaceutiques efficaces.

5. Supplément diététique selon au moins l'une des revendications précédentes, **caractérisé en ce que** l'enrobage est formé de plusieurs couches composées de différents composants.

6. Supplément diététique selon au moins l'une des revendications précédentes, **caractérisé en ce que** l'enrobage présente une épaisseur de couche constante.

7. Supplément diététique selon au moins l'une des revendications précédentes, **caractérisé en ce qu'**une couche protectrice est formée sur l'enrobage.

8. Supplément diététique selon la revendication 7, **caractérisé en ce que** la couche protectrice est un film ou une cire.

9. Supplément diététique selon au moins l'une des revendications 1 à 8, **caractérisé en ce que** la masse de l'enrobage est supérieure à la masse du produit naturel végétal enrobé.
